# EUROPEAN PATENT SPECIFICATION

(11) **EP 2 687 782 B1**
(45) Date of publication and mention of the grant of the patent: **10.05.2017**
(21) Application number: 12183661.3
(22) Date of filing: 10.09.2012
(51) Int. Cl.: F23G 5/20, F23G 5/00

(54) **A method for production of electricity and heat in a process of thermal conversion of different types of waste in an integrated installation and an integrated installation for production of electricity**
Verfahren zur Erzeugung von Elektrizität und Wärme in einem Verfahren für Wärmeumwandlung aus verschiedenen Abfällen in einer integrierten Anlage und integrierte Anlage zur Erzeugung von Elektrizität
Procédé de production d'électricité et de chaleur dans un processus de conversion thermique de différents types de déchets dans une installation intégrée et installation intégrée pour la production d'électricité

(30) Priority: 21.07.2012 PL 40007612
(43) Date of publication of application: 22.01.2014
(73) Proprietor: Bak, Tadeusz, 05-660 Warka (PL)
(72) Inventor: Bak, Tadeusz, 05-660 Warka (PL); Wysocki, Michal, 31-216 Krakow (PL); Wysocki, Zygmunt, 31-228 Krakow (PL)
(74) Representative: Kancelaria Eupatent.pl Sp. z.o.o

(56) References cited:
- WO-A1-03/102472
- WO-A2-2012/085880
- FR-A1- 2 649 187
- US-A1- 2008 163 803

## Description

The object of the invention is a method for production of electricity and heat in a process of thermal conversion of different types of waste in an integrated installation and an integrated installation for production of electricity.

Technical progress in the methods of thermal wastes disposal is dynamic. Many companies try to find the best solution of wastes disposal in the most effective and economic way and in accordance with the all applicable provisions concerning environmental protection. Since wastes have a relatively high calorific value, so the natural trend is a trial to recover heat energy as far as possible.

The most popular method of wastes disposal is the combustion of waste at high temperatures in very complex and expensive installations - in various type furnace boilers.

The precursors in implementing this technology are the following companies: Alstom (Foster-Wheeler), Lurgi-Lentjes-Deutsche Babcock Energie (LLBj) and Babcock-Wilcox. First in the world municipal wastes incineration plant was erected in 1875, in Meanwood Road, England. Whereas the first German incineration plant of municipal wastes was found in Hamburg in 1892. Since the mid 1960s of 20th century, a dynamic development of installations for thermal treatment of wastes in Western Europe was occurred. Currently in Europe, approx. 400 municipal wastes incineration plants are operable, the majority of them comply with EU standards concerning emissions into the environment.

Municipal wastes and sewage sludge in the world are processed to the greater or lesser extent, or re-used (in composting, incineration, gasification, etc.). The rate of their utilisation is subject to the level of economic development of a given country and varies from 15% for countries with a lower development rate, up to 85% for those most developed. In this background, Poland is located particularly adversely - managing only 3.8% of municipal wastes - indicating the size of the home reserve resources of renewable sources of energy agents. Combustion undergoes municipal wastes and sewage sludge. Generally, the authors of specific solutions suggest co-incineration of municipal wastes and sewage sludge with hard or brown coal in CHP plants, power plants or cement mills.

Incineration is an effective and commonly used method of reducing the quantities of wastes generated in the EC countries; however, it is extremely costly method both in terms of investment and operationally.

Besides, the incineration is a solution of enormous negative impact on natural environment despite continuous improvement of flue gas purification techniques. In the mid 1990s, a standard flue gas purification system was composed of a two-stage wet electrostatic absorbing system, an adsorption node on active carbon, and catalysts for the reduction of nitrogen oxides and the decomposition of dioxins. The flue gas treatment system itself absorbed much more than 50% of the total costs for the construction of wastes incinerators and allowed to maintain acceptable emission levels.

Now in certain purification systems for flue gases a dry system is applied that consists in the injection of calcium reactant: CaO, Ca(OH)₂ or sodium reactant: NaHCO₃, the injection of powdery activated carbon, fabric filter dust collectors, selective non-catalyst reduction of nitrogen oxides (SNCR) involving the introduction of ammonia or urea solution into the boiler. As can be seen, all varieties of used technologies in the wastes combustion process to treat flue gases need dosing huge amounts of additional chemical compounds. In this way in many cases, wastes incineration plants generate by weight not less wastes in respect of the weight of incinerated waste.

The largest suppliers of incineration plants are currently: Babcock & Wilcox Volund (Denmark), Martin (Germany), CNIM (France), Austrian Energy & Environment (Austria, Switzerland), Keppel Seghers (Belgium) and many others.

The main disadvantages of wastes incineration are the following:
- Cause air pollution by gases of high hazards to man; Pollutants occurring in concentrations below the standard do not lose their characteristic harmfulness and the limit values of standard are agreed upon and there is no guarantee that they have been properly defined;
- Production of large quantities of slag and ash;
- One tonne (Mg) of burnt municipal wastes results in 290 up to 320 kg of slag and dust, according to a type of exhaust purification process (process: dry, semi-dry, wet);
- The wastes incineration "products" are: wastes water generated while cooling slag from furnaces, and wastes water from wet flue gas treatment. The wastes water contains several substances that are very toxic, such as: phenols, cyanides, fluorides, arsenic, and heavy metals. It is often necessary to erect a wastes water treatment plant for the wastes incinerator;
- The incineration plant produces even more wastes than it is able to utilise. This is because of a simple fact that the combustion process of wastes needs additionally to supply oxygen, water and other substances supporting the purification process of flue gases;
- It requires a complex dedusting system and a highly efficient flue gas purification system, that cause raising investment costs of the wastes incineration plant;
- As a result the combustion process, thousand of new chemicals are formed that were not present in the wastes before their incineration. Incineration plants operate as chemical synthesisers (during the combustion, a part of chemical compounds decompose, but at the same time atoms of disintegrated particles fall in reactions with other atoms to produce new substances that are often more dangerous than the original, contained in waste);
- Producing high toxicity waste;
- Negative impact on the environment, in particular on the atmosphere, where hazardous compounds from the group dioxins and furans are emitted;
- Incineration carried out incorrectly gives residues containing organic substances and pathogenic micro-organisms;
- The construction costs of wastes incineration plant is the highest in comparison to all other technologies offered on the market;
- Very high costs of operation - have to be translated into the charges for the citizens;
- A negative social image;
- Requires a special construction of sites for technological wastes (ash and wastes from flue gas purification) that are classified mostly as toxic because they collect the most dangerous part of toxins, depending on the stage of purifying the flue gases. In order to protect them against leaching toxic substances, they are solidified in concrete products or the process of wastes vitrification is carried out. This increases the costs of wastes incineration;
- Dust amounts emitted to the atmosphere grow, very burdensome in operation technology used only to a large scale.

The heat treatment of wastes - in the assumptions of comprehensive wastes management - concerns only these wastes residues which lost their utility values because of earlier applied wastes utilisation methods, and may be only used as a raw material to produce energy. As early as before I World War the research and development actions had been taken out to refine liquid and unctuous residues from crude oil processing, and then municipal wastes and municipal sewage sludge. Today, these processes have gathered a specific ecological and economic importance in utilising and neutralising many of municipal wastes and sewage sludge. These processes dominate not only by their economic efficiency over the combustion of the mentioned above wastes in CHP plants, but they produce smaller volume of deeply neutralised and utilised residues with their far less harmfulness to the environment.

These wastes heat treatment processes include:
- Pyrolysis - the specificity of pyrolysis technology is to use synthesis gas (produced in considerable quantities), containing mainly CO + H₂ for the production of electricity and heat;
- Plasma - allowing to obtain synthesis gas and vitrified solid products;
- Gasification - giving a high value semi-product in a form of synthesis gas - that leads additionally to a significant neutralisation of environmentally harmful materials, at the same time, this process is preceded by pyrolysis of organic components together with depolymerisation of plastics.

### Pyrolysis

Pyrolysis is a process of endothermal transformation of organic substances rich in carbon, carried out in elevated temperatures (350 °C up to approx. 850 °C) in the environment completely deprived of oxygen or in presence of its negligible small quantities (low-temperature pyrolysis: 350 °C - 500 °C; high-temperature pyrolysis: 700 °C - 850 °C). It requires providing heat from the outside. During pyrolysis, the mass of wastes is converted into:
- Pyrolytic gas - that contains mainly hydrogen, methane, ethane, and their homologues, steam, carbon monoxide and carbon dioxide, as well as H₂S, NH₃, HCl and other;
- Pyrolytic coke - a solid phase containing: carbon, metals and other inert substances;
- Liquid substances - a mixture of oils, tars, water with simple aldehydes dissolved in it, alcohols, and organic acids.

Commercially, this process is used on an industrial scale in many places in Europe and all over the world. Amongst the most well known installation of this type are factories: in Burgau, Hamn in Germany, and several dozen other places in the world. Despite unquestionable benefits and both technological and environmental advantages with reference to the wastes incineration, pyrolysis has the following disadvantages:
- The wastes must be crushed, melt and/or separated before the entry into the pyrolytic furnace in order to prevent the blockage of wastes feeder and/or transporting system;
- large residue of after-processing wastes in a form of pyrolytic coke breeze, oils and tars, represents approx. 20-35% of processed waste;
- Oils and pyrolytic tars contain toxic and carcinogenic compounds;
- Pyrolytic coke does not comply with EU and Polish standards for storage because of the high carbon content;
- Pyrolytic coke contains a large number of heavy metals;
- Production of sterile slag and other residues requires additional disposal of pyrolytic coke, e.g. in incineration plants;
- To do this, the supporting fuel is required to maintain this process;
- Low energy efficiency (comparable and even less than for the combustion);
- Formation of gases that are very difficult for purification of pyrolytic and synthesis gas, flue gas and other products of pyrolysis (requirement of extensive and costly treatment and neutralisation node, like in the case of wastes incineration plant);
- Higher investment and operational costs than for incineration plants.

### Plasma

Plasma is a term assigned to strongly ionised gas, in which there are neutral particles, ionised atoms and electrons. Despite the fact that plasma contains free charged particles, in a macro scale, it is electrically neutral. The ability to achieve high temperatures in plasma beam makes it possible to decompose the wastes in a more effective way than the incineration since the plasma generated by an electric field, raises temperature to a high value (more than 3,000 °C to 14,000 °C, and in some installations - even up to 20,000 °C), higher than the flame in boil furnaces and its energy can cause decay of all chemical compounds into simpler components, i.e. to transform them in the gaseous phase.

At present, 25-30 installations are operating in the world. Most of them are incineration plants for the disposal of hazardous wastes such as: ammunition, medical wastes, tannery wastes, asbestos, PCBs, and other. The use of low-temperature plasma is a relatively new idea. The most active companies in offering plasma technology are: Plasco Engineering Group (Canada), Alter NRG (Canada), Pyrogenesis (Canada), Allied Tech. (USA), Solena (USA), StarTech (USA), Geoplasma (United Kingdom), Europlasma (France).

The main disadvantages of plasma technology would be the following:
- Very high investment costs of construction (approx. 3 times higher than the construction costs of classic incineration plant);
- A high energy-consuming process (installations require high-calorific wastes: 12-16 MJ/kg). Taking into account that the average net calorific value of municipal wastes from large cities in Poland is about 7-10 MJ kg, this means that the process should require a huge quantity of additional energy;
- Very high costs of operation, i.e. the increase in charges for the public (1 kg of wastes needs approx. 4 MJ of energy to be utilised);
- All working installations are characterised by large technological problems of the operation of plants as well as difficulties in keeping emission limits (authorities of Ottawa have recently closed the installation of Plasco company - 25,000 Mg/year - due to the numerous breakdowns and permanent exceeding the emission limits);
- Low energy efficiency;
- The data from the existing plasma installations do not confirm especially low level of emissions - it is comparable to the combustion process at the incineration plants on;
- The technology is profitable only to a large processing scale - more than 300,000 Mg/year.

### Waste gasification

Gasification provides the maximum possible reduction of waste volume. The rate of material use of all kinds of wastes of organic character in different temperature ranges is the highest with reference to all other technologies. Apart from this, the gasification process eliminates 100% of dioxins and furans that are not able to be recombined at low parameters of temperature and pressure. Efficiency Index of waste gasification is particularly high when the utilisation of obtained intermediate semi-products is coupled with other installations in CHP plants, equipped with units to produce electricity, such as, e.g., turbo-generators or ORC. By implementing such solution, at the same time extremely high environmental and economic effects can be obtained. This technology has been checked in the multi-annual testing of both pilot and commercial installations. Its undoubted advantages over other technologies induced that more and more companies take decisions on its application in their planned thermal plants of waste disposal.

The recent large scale plant to mineralise mixed municipal wastes has been built in Lahti, Finland, in 2012, which achieved processing output approx. 250,000 Mg/year and power production of about 50 MWₑ and 90 MWₜ. Applied technology allows for high efficiency utilisation of only mixed municipal wastes to the energy form of electricity and heat.

The basic assumption of modification of the gasification system, when designing the plant in Lahti, was an idea of combustion of post-processing gases in a gas boiler, which in effect led to achieve high temperature of 900 °C. Such high temperature and specificity of the technological equipment to gasify wastes induces the erection of complex systems of treating after-processing gases, which strongly raise the construction costs of such plant.

### Mixed system: a low-temperature quasi-pyrolysis and gasification

It is a process that is similar to the gasification process, in which a matter of organic character, under the effect of heating in temperature range from 300 to 600 °C, with a little amount of air, is decayed into simple compounds: the so-called organic gas containing a high percentage of H₂, CO, and small amounts of hydrocarbons up to C₈, and small quantities of inorganic fraction of mineral residues in a form of glass and metals that do not constitute any hazardous wastes. The resulting gas is subject to a full oxidation in a catalytic process to achieve CO₂ and H₂O.

The basic feature of this technology is its ability to dispose all wastes of organic character in a solid, liquid and semi-liquid phase, regardless of their calorific values, the content of: toxic compounds, oils, ash, moisture content as well as their size.

It is the only technology in the world which allows for the full conversion of chemical energy any type of wastes of organic character, into electricity and heat. The most important aspect of this technology, despite the fact that disposed will be hazardous wastes, is no negative impact on the environment, in particular, on human health.

Advantages of such system are the following:
- Complexity of the solution - the ability to utilise various forms of wastes of organic character regardless of their physical state, including hazardous ones, in one installation - none of the available at present technologies offers this;
- Checked and commonly operating from many years technologies - a unique combination of several technologies, the result which a synergistic effect has been reached;
- It does not require erection of large and bulky objects;
- It does not require designating a protection zone for the plant;
- A low temperature of the process - that guarantees the most effective waste disposal and does not produce any other additional wastes, at the same time, with an optimum electricity recovery owing to the operational parameters of the system;
- The highest efficiency of converting wastes into energy - an exceptionally low energy-consuming process - therefore, there is huge excess of after-processing heat that may then be used for the production of electricity;
- A favourable energy balance of the process - the highest energy efficiency from all technologies available on the world market with the lowest energy-consuming process;
- A low cost of the investment - compared to the described technologies - many time cheaper;
- A low operational costs - compared to other technologies - the unit cost is many times cheaper;
- Improvement of sanitary conditions and the reduction of health risk of residents;
- The integrated approach - reduces operating cost of the disposal of hazardous and industrial wastes compared to other methods; the synergistic effect;
- A short time of the investment - a few to more than a dozen months since obtaining a building permit;
- Easy scalability of the investment;
- In the process does no dioxins and furans are formed;
- In the process are not produced any additional NOx, methane and CO;
- The total dehydration of processed wastes;
- The total deodorisation of processed wastes;
- The total oxidation of organic compounds to H₂O and CO₂;
- The lack of additional installations for flue gas purification. The existing installations are sufficient to maintain the ecological requirements;
- The post-processing waste (mineral) contains less than 1% of the content of C_{org};
- Metals and metal oxides are in a sustainable way related to the parts mineral wastes;
- Referentiality - is based on the integration of repeatedly proven in the world technologies classified to BAT (Best Available Techniques), it also uses Polish engineering idea;
- Radical limitation of the quantities of stored wastes - in particular, their organic fractions that is subject to chemical and biological transformations in the process of storage;
- The lack of stack installation, so characteristic for incineration plants, a positive social view.

Disadvantages of the system are as follows:
- The lack of disposal of inorganic wastes.

This type mineralization system has been presented in a Polish patent application P.364331, in which an installation for waste mineralisation has been described, including: a reactor with an initial chamber, in which the wastes are dried and preliminary degassed, a reaction chamber in which are arranged the conditions necessary for a thorough degassing and gasification of wastes with reduced oxygen content. The presented reactor has no adjustable operational parameters. Therefore, the wastes have to be supplied into the reactor in strictly defined proportions, so as to ensure appropriate conditions for the effective gasification.

From WO2012085880 there is known a modular plant, comprised of at least one basic module, which is suitable for converting carbonaceous matrices into fuel or other useful products. The modular plant includes a rotary reactor equipped with a rotating drive mechanism and a fixed stationary body. The inclination of the reactor with rotating central longitudinal axis can be varied from 0 DEG to 45 DEG with respect to a horizontal plane.

The object of this invention is a combination of several technologies for processing any type of wastes into a single integrated technological sequence allowing in an optimal way to transform chemical energy of the processed wastes into electricity and heat by using a low-temperature quasi-pyrolysis and gasification.

The integrated technological sequence presented in the invention, consists of the following consecutive technological processes: waste sorting, waste drying, systems of waste preparation, rotary mineralisation chambers with vanes under adjustable angles installed inside the chambers that induce a variable waste flow inside of them, the systems of catalytic treatment of after-process gases, a system of catalytic oxidation of after-process gases, the systems for generation of electricity and heat.

The object of the invention is a method and an installation according to the appended claims.

The present invention is shown by means of exemplary embodiment on a drawing, in which:
Fig. 1 presents a diagram of a fragment of processing line to carry out the stage I, i.e. the mix preparation,
Fig. 2 presents a diagram of a fragment of processing line to carry out the stage II, i.e. the mineralisation,
Fig. 3 presents schematically a longitudinal cross-section of the mineraliser,
Fig. 4A-4E present schematically lateral cross-sections of the mineraliser,
Fig. 5 presents schematically the mineraliser in oblique view,
Fig. 6 presents a table of wastes.

The main elements of the installation are: a sorting system, a drying system, mineralisers, processing gas purification systems, heat exchange systems as well as heat and electricity production units, such as: turbogenerators, turboexpanders or ORC.

The way of dealing with waste in order to convert it thermally depends on its type (waste code), its condition, moisture content and calorific value. Generally, the installation described is capable convert thermally all kinds of wastes of organic character, and particularly:

| Waste type | Waste CODE |
|---|---|
| Biodegradable waste (101) | 20 02 01 |
| Unsegregated (mixed) municipal wastes (102) | 20 03 01 |
| Combustible wastes (alternative fuel) (103) | 19 12 10 |
| Other waste (including mixed substances and objects) from waste mechanical treatment, other than those mentioned in 19 12 11 (104) | 19 12 12 |
| Stabilised municipal sewage sludge (105) | 19 08 05 |
| Hazardous liquid waste (106) | Different codes |
| Hazardous solid waste (107) | Different codes |
| Non-hazardous waste, including | Different codes |
| Used tyres (108) | 16 01 03 |
| Waste electrical and electronic equipment (109) | 20 01 36 |

.The Waste Code is provided in accordance with the Regulation of Minister of Environment, of 27 September 2001 on waste catalogue (Polish Journal of Laws, 2001, no. 112, item 1206).

A basic product in the entire process is electricity and heat. To make it possible, a high-energy gas is needed at a suitable temperature, which in a heat exchanger 146 can heat up the water up to convert it into a steam, or air which, after supplying it to the unit for electrical current generation 147, converts its kinetic energy into electricity. Of course, the gas after departure of heat exchanger must be properly purified and cooled in order to be able to be emitted to the atmosphere without prejudice to the environment. In order to make it possible, all wastes must be adequately prepared, dried and crushed to a very similar form, so that they can be mixed to obtain predetermined (optimal) parameters. Therefore, the whole process can be divided into several stages and phases: preparing mixtures, sorting, drying, crushing, buffering), mineralisation, processing gas purification, heat exchange and production of electricity and heat, emission to atmosphere.

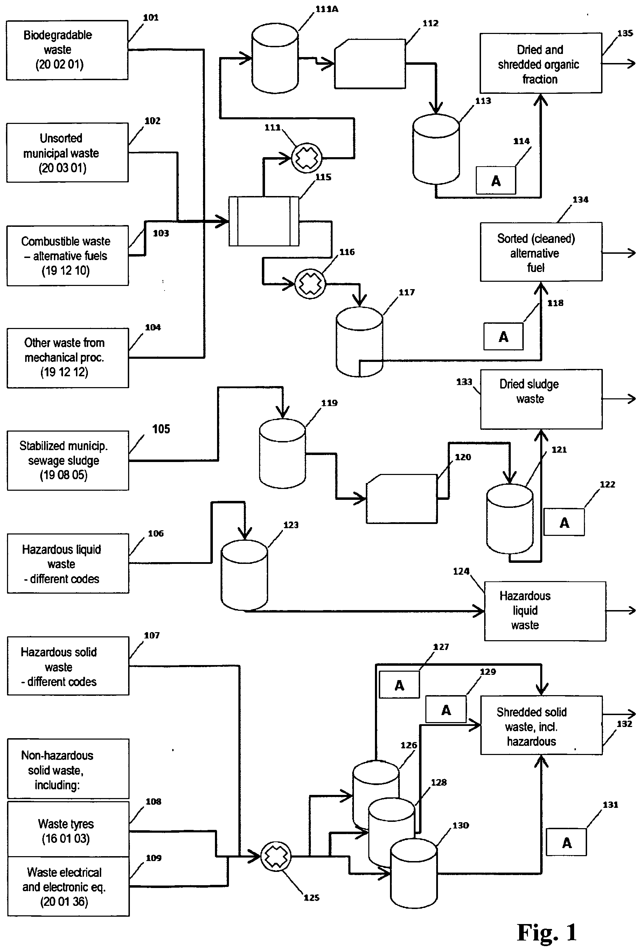

### STAGE I - preparing mixtures: Fig. 1

Phase I - sorting - takes place in sorting plant 115 and aims to separate valuable wastes for recycling processes other installations, such as: paper, paperboard, plastics (PET). During sorting there are also separated parts that will not be directed to further process, i.e. to be mineralised. These are the fractions such as: metals, glass, rubble, etc. Phase I involves: non-segregated municipal waste 102, combustible wastes (alternative fuel) 103 and other wastes 104, as well as biodegradable wastes 101. In case of non-segregated municipal wastes 102 - it is essential to select the most valuable materials destined for recycling. In case of the other wastes, phase I aims to clean them from the fractions that are not subject to further treatment in mineralisers 139-141. It is possible to omit the sorting plant, e.g. in the case of alternative fuels 103 previously specially prepared for incineration. From the sorting plant 115 the organic fraction is directed to a dryer 112 through a crusher 111 to a buffer tank 111 A, and the remaining waste stream is addressed to a buffer container 117 through a crusher 116. The buffering aims to ensure a uniform waste stream to the mixers and to the dryers.

Phase II - drying - aims to evaporate moisture content. This improves the calorific value of the processed waste and at the same time increases the yield in electricity. To the dryer 112 is directed the waste after passing the Phase I, while to the dryer 120 is delivered a stabilised municipal sewage sludge 105 that is stored in the wet form as a batch material in the tank-silo, to which is delivered straightly from the waste reception. It is preferable to use two separate dryers: 112, 120, but on order to increase the flexibility of drying process, for both of them, it can be possible to supply both sewage sludge and the waste fraction after Phase I. After drying, the dried wastes are directed to buffer tanks 113 and 121 in order to provide adequate waste streams to the mixers.

Phase III - crushing - aims to grind the supplied waste fractions. To crushers 111, 116 and 125 are supplied any wastes of a permanent character, as well as the fractions: the whole fraction after Phase I (sorting), alternative fuels 103 (not passing through the sorting plant), solid non-hazardous wastes e.g. used tyres 108 and waste electronic and electric equipment 109. After crushing, the individual fractions are supplied to buffer tanks 126, 128, 130 and 117.

Phase IV - buffering. For separate types of wastes, buffer tanks 111 A, 112, 117, 121, 126, 128 and 130 are prepared buffer in order to ensure: (i) continuity of the supply to the mixers or directly to the tubes in which takes place the process of mineralisation, (ii) the supply of wastes of a suitable calorific value to the mixers, i.e. the achievement of the required values in the individual mixers. Wastes stored in buffer tanks are subject to a permanent analysis of moisture content, calorific value by using the analysers 114, 118, 122, 127, 129 and 131.

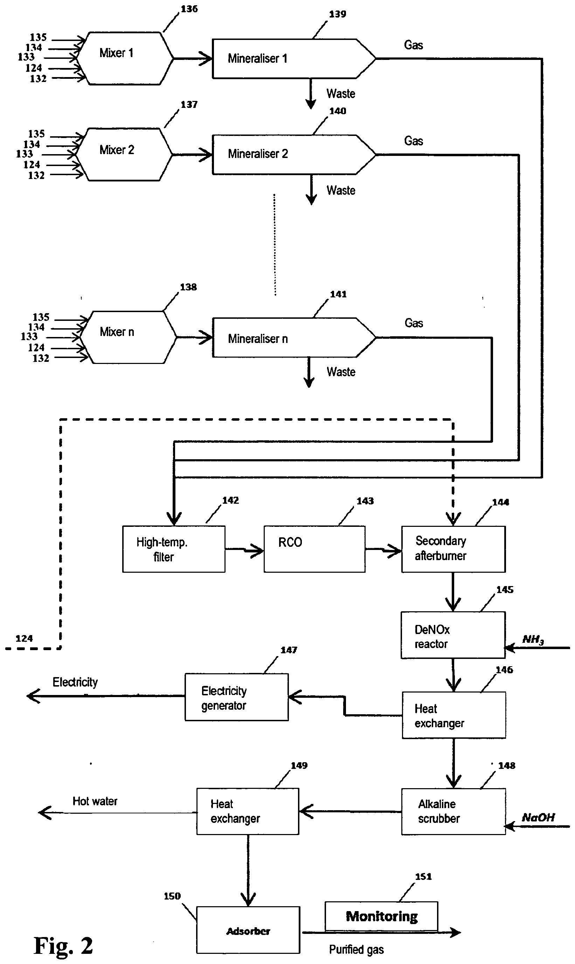

### STAGE II - mineralisation: Fig. 2

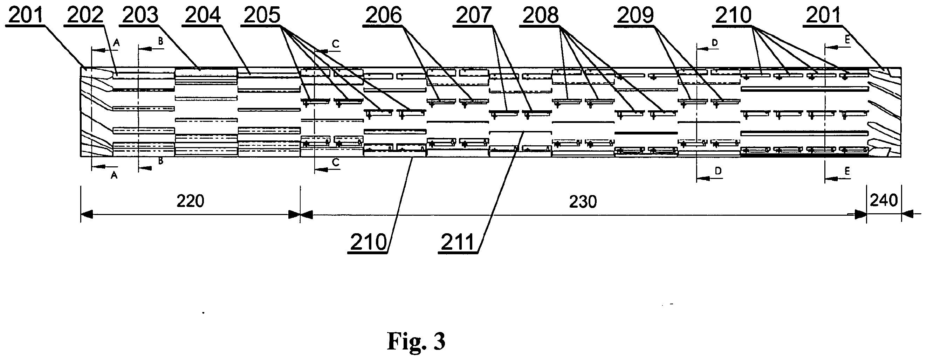

The mineralisation process itself is conducted in the specially prepared pipes also known as mineralisers: 139, 140,141, inclined to the ground at a small angle, about 1 degree. It is characteristic that each mineraliser 139, 140,141 (may be many of them) is equipped with a mixer 136,137,138 and feeder that forms an integral part of the mineraliser. In the mixer 136, 137, 138 takes place the preparation of mixture of wastes of previously stabilised parameters, such as: the average calorific value and moisture content. The waste batch prepared in the mixer is supplied to the mineraliser feeders. The role of feeder is to ensure continuous supply of the batch material into the mineraliser. The mineraliser is rotated during its operation with a small rotational speed, preferably from 0.5 rpm to 9 rpm. The inclination and the rotational speed allow the waste move in the entire process. It is characteristic that inside the mineraliser, the construction of which is presented in detail the Fig. 3-5, are installed special vanes (guides), which are controlled by adjusting the inclination angle, inducing faster or slower movement of the wastes in the mineraliser. This allows optimising the course of mineralisation process. Each mixer adapts waste composition respectively set for a given mineraliser, with the moisture content and calorific value, appropriate for the vane of the mineraliser. It is characteristic that thanks to the installation of vanes with adjustable inclination angle, it is possible to adjust each of the mineralisers to process waste of a given type, which allows to select more optimally the composition of waste mixture. In view of the fact that the mineralisers have adjustable configurations, if the stream of supplied wastes is changed, it is also possible to adjust the operation of mineralisers to the current content of moisture and the calorific value of the processed waste stream. Thanks to the use of a few mineralisers, the operation of the one of them may be temporarily stopped in order to change its configuration, not stopping the processing of wastes in other mineralisers, which is of particular benefit while processing the wastes of the type which must be processed rapidly, which are fed into the installation in quantities exceeding the maximal volume of tanks.

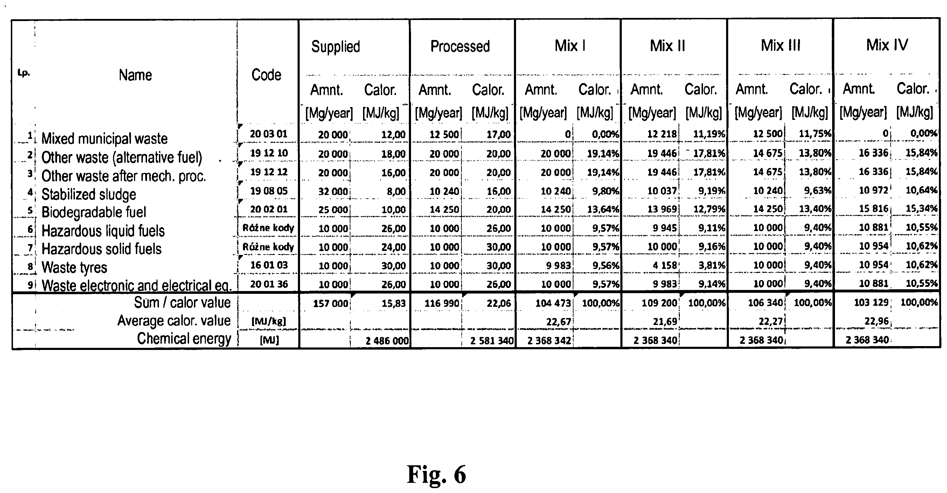

The table presented in the Fig. 6 shows types of wastes, their calorific value measured at the input to the system and the quantities and calorific value after the process of preparing the wastes to be mineralised. Additionally, it is presented 4 types exemplary mixtures.

The basic assumption made in order to prepare mixtures is to obtain a batch material for the assumed amount of chemical energy for each of them at the specified range of amount of processed material and within the range of calorific values.

The parameters for the various types of wastes, presented in Fig. 6, their calorific values and exemplary mixtures are only examples illustrating the method of preparation of the individual mixtures, so that as to obtain the almost constant amount of electricity (power variations only under in certain established limits) at the output of the installation. In order to achieve this, it is necessary to implement the entire system of buffering of different types of wastes and the method of supplying the mixers and feeders for the process of mineralisation.

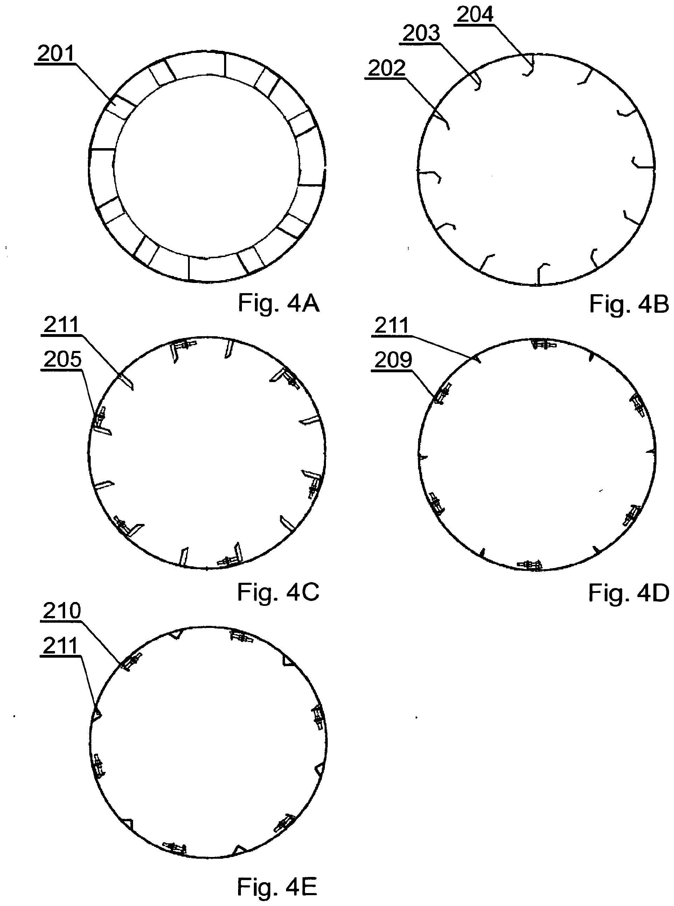

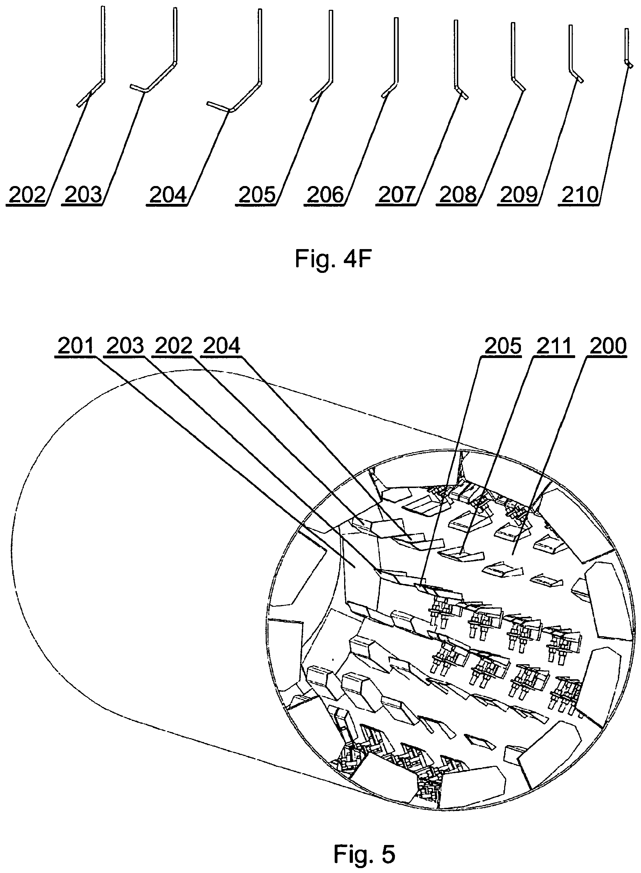

The construction and the operation mode of mineralisers have been discussed in detail in relation to Fig. 3-5, where Fig. 3 presents schematically a longitudinal cross-section of the mineraliser, Fig. 4A-4E present schematically lateral cross-sections of mineraliser along the lines, respectively: A-A, B-B, C-C, D-D, E-E from Fig. 3, Fig. 4F presents schematically lateral cross-sections of the individual vanes, and Fig. 5 presents schematically the mineraliser in an oblique view, with a considerable inclination.

The mineraliser has the construction of adjustable configuration that is adjustable accordingly to the moisture content and net calorific value of the mixture supplied from a mixer to a given mineraliser.

The mineraliser is a steel tube 200, made of high temperature resistant metal sheet and is tilted to the ground at an angle of approx. 1°. The mineraliser lies on two raceways and is rotated around its longitudinal symmetry axis through a gear driven by a motor. The rotation of tube causes the movement of batch material on vanes 201-211, looking up in the lateral cross-section of the tube, and its falling from a height related with a shape of given vane. The inclination of the tube makes the batch material moving slowly along the tube axis.

In the exemplary mineraliser, the time of passing of the batch material through entire tube, diameter of approx. 2 meters and length of approx. 20 metres is about 30 to 60 minutes, according to adjusted operational parameters of the mineraliser. The rotational speed is from approx. 0.5 rpm to approx. 2 rpm.

The mineraliser is heated as follows: after the ignition of gas burners fuelled with e.g. natural gas or diesel fuel, the heating of tube takes place up to its set temperature, i.e. to approx. 600 °C, and then the gas burners are switched off, and the process is self-sustained.

The batch material is fed into the mineraliser through s screw conveyor and the inert waste is received at the end of mineraliser and cooled to a temperature that allows for further transport. The rotational speed of mineraliser can be regulated in two ways: (i) with the use of inverters, and (ii) by means of an appropriate adjustment of driving gears.

In the tube there are distinguished three zones: an evaporation zone 220, where the evaporation of moisture content takes place, a mineralisation zone 230, where the appropriate process of gasification and the conversion of waste into the gas and inorganic waste occurs, a final zone 240, in which there is no more waste but the gas only, where the reception of non-mineralised waste occurs.

In the first part of the evaporation zone 220, presented in the cross section of Fig. 4A, the vanes 201 have a shape of flat sheets intended for the initial mixing the batch material. The second part of the evaporation zone 220, presented in the cross section of Fig. 4B, contains three rings of vanes arranged alternately in each ring 202, 203, 204, in a shape of vessels of different depth, from which the batch material is poured while rotating the tube 200.

In mineralization zone 230, there are several rings vanes and in each ring there are alternately mounted vanes 211 with a constant inclination angle and vanes 205-210 of adjustable inclination angle. Vanes 211 are arranged in parallel to the longitudinal symmetry of tube 200, so the angle of inclination with reference to the level is equal to the inclination level of tube 200. These vanes constitute both the means to move the batch material inside the tube and the structure stiffening of the tube 200. Vanes 205-210 have the adjustable inclination angle along the longitudinal symmetry axis of tube 200, preferably within the range of - 1% to +7.5%. The adjustment of inclination angle for vanes 205-210 to a negative value will slow down the movement of batch material along the tube. In particular, the adjustment of inclination angle of vanes 205-210 contrary to the direction of inclination of the tube results that the material on vanes 205-210 is not moved towards the outlet of the tube and is moved only on vanes 211. The adjustment of inclination angle of vanes 205-210 to zero induces that the material on vanes 211 and 205-210 is moved with the same speed. In turn, the adjustment of inclination angle of vanes 205-210 to a positive angle results that the material on vanes 205-210 is moved faster than the material on vanes 211. Thereby, the adjustment of inclination angle of vanes 205-210 enables to adjust the speed transporting the batch material along mineralization zone 230. Vanes 205-210 in mineralization zone have a shape of vessels, the depth of which decreases towards the outlet of tube 200 due to a decreasing amount of material which remains to be mineralised in the direction towards outlet of tube 200.

In the final zone 240, there are vanes 201 arranged as the vanes 201 in the first part of evaporation zone 220, which play a role of limiters for possible residues of non-mineralised material.

The process of mineralisation in the presented mineraliser can be controlled by changing rotational speed of tube 200 and by the change of inclination angle of vane 205-210. By changing rotational speed of tube 200, the intensity of pouring the material in cross section of the tube is modified. Increasing the rotational speed of mineraliser allows for a faster evaporation of the batch material in zone 220, thus the greater rotational speed should be adjusted for the materials with lower moisture content. Change the angle of inclination for vanes 205-210 induces change the speed of moving the material through the mineralization zone 230. Increasing the angle of inclination for vanes 205-210 allows for faster passage of the batch material through zone 230, and therefore this adjustment should be applied for materials with a higher calorific value, that are mineralised faster.

In order to achieve an efficient processing the wide range of wastes, each of mineralisers: 139, 140, 141 may have adjusted other angle of inclination for vanes 205-210 of the mineralization zone. Then, by using suitable mixers 136, 137, 138, each mineraliser has adapted such a combination of the batch material that is processed in its optimal way. For example, if mineraliser 139 has the inclination angle of vanes less than the vane angle adjusted for mineraliser 140, as the batch material for mineraliser 139 should be chosen Mixture II in Fig. 6, and as the batch material for mineraliser 140 should be chosen Mixture IV in Fig. 6. For each of the mixtures fed to mineralisers their mean moisture content is calculated on the basis of the data from analysers: 114, 118, 122, 127, 129 and 131 and taking into account the moisture content, the rotational speed of the tube is adjusted.

### STAGE III - cleaning processing gases: Fig. 2

In mineralisers 139, 140, 141, follows the process of converting the waste mixture into the high energy reaction gas that is then supplied to the high temperature filters 142 and a catalytic-oxidising afterburner 143, and a secondary afterburner 144, where it is subject to full oxidation to H₂O and CO₂ in the multi-catalytic system, with large quantities of the reaction heat release, the part of which is returned to sustain the process, and mainly to evaporate water from wastes. In parallel to this process, a hazardous liquid waste 106 can be supplied onto the bed of oxidising catalyst, which increases the energy value of the process of waste disposal.

In the reactor DeNOx 145, the reaction of reduction of nitrogen oxides to N₂ is carried out, if any existed in the processed waste. Then gas is supplied to the heat exchanger 146, where the heat is passed from the gas to the liquid water. An alkaline scrubber 148 is activated, when the processed wastes contain halogens or sulphur compounds and is used for their absorption from the purified gas. Gas after the alkaline scrubber is addressed to the heat exchanger 149, in which the gas returns heat to water passed through the heat exchanger, which may be disposed to e.g. municipal heating system or to the dryer 112 or 120 shown in Fig. 1. Then the cooled gas is directed through the adsorber 150 to the atmosphere, already as practically pure inert gas for the environment, and its purity is to be monitored by using a monitoring system 151. Of course, in the case installing several mineralisers, separate purifying sequences may be used for the individual mineralisers or for groups of mineralisers processing wastes of a similar type.

### STAGE IV - production of electricity and heat: Fig. 2

After the reactor DeNox 145, the gas after purification process is directed to the heat exchanger 146, where the process of exchange of heat between the gas from the process of mineralisation and the air or water supplied to the heat exchanger, the hot, high pressure air or hot and high pressure water steam is formed that are directed to an electricity and heat generating unit 147, in which electricity and heat are produced. Depending on the number of mineralisation lines, an adequate number of turbines 147 can be built in to ensure electric power supply resulting from the calorific value of processed wastes and the composition of generated gas.

## Claims

1. A method for production of electricity and heat in a process of thermal conversion of different types of wastes in an integrated installation, wherein different types of wastes (101-109) are segregated to separate wastes destined for thermal disposal (124, 132, 133, 134, 135), which are then processed in at least two mineralisers (139, 140, 141), each having a form of an isolated, longitudinal, rotatable and inclined tube (200) with vanes (205-210) arranged on its internal walls to scatter the material during the rotation of the tube (200), with an evaporation zone (220) in which the evaporation of moisture from waste material delivered in batches takes place, and with a mineralisation zone (230) in which a process of gasification of the batch material takes place, and wherein the batch material is transformed into a hot gas and inorganic waste, wherein after that the hot gas, after its purification, is converted into electricity and heat, **characterized by**:
- performing periodic measurements to determine calorific value, moisture content and composition structure of the wastes intended for thermal disposal (124, 132, 133, 134, 135) by using analysers (114, 118, 122, 127, 129,131),
- using rotary mineralisers (139, 140, 141) that comprise in the mineralisation zone (230) vanes (205-210) with adjustable angle of inclination to the longitudinal axis of the mineraliser tube (200), so that during the operation of mineraliser, for larger inclination angles of vanes (205-210) the batch material passes faster through the mineralisation zone than for smaller inclination angles of vanes (205-210),
- by using mixers (136, 137, 138) assigned to the mineralisers (139, 140, 141), the wastes (124, 132, 133, 134, 135) are mixed with each other in proportions dependent on a predetermined amount of chemical energy of the batch material and on the inclination angle of vanes (205-210) set in the particular mineraliser (139, 140, 141), so that for a mineraliser (139, 140, 141) having a larger inclination angle of vanes (205-210) a mixture with a higher calorific value is selected than a calorific value of mixture for a mineraliser (139, 140, 141) having a smaller inclination angle of vanes(205-210),
- wherein the rotational speed of each mineraliser (139, 140, 141) is adjusted according to the moisture content of the mixture provided to the particular mineraliser (139, 140, 141).

2. An installation for production of electricity and heat in a process of thermal conversion of different types of wastes in an integrated installation comprising a section for segregation of different types of wastes (101-109) to separate wastes destined for thermal disposal (124, 132, 133, 134, 135), and at least two mineralisers (139, 140, 141), each having a form of an isolated, longitudinal, rotatable and inclined tube (200) with vanes (205-210) arranged on its internal walls to scatter the material during the rotation of the tube (200), with an evaporation zone (220) in which the evaporation of moisture from waste material delivered in batches takes place, and with a mineralisation zone (230) in which a process of gasification of the batch material takes place, and wherein the batch material is transformed into a hot gas and inorganic waste, wherein the installation further comprises sections for producing electricity and heat from the hot gas output from the mineralizer (139,140, 141), **characterized in that**:
- it comprises analysers (114, 118, 122, 127, 129, 131) configured to perform periodic measurements to determine calorific value, moisture content and composition structure of the wastes intended for thermal disposal (124, 132, 133, 134, 135),
- wherein the mineralisers (139, 140, 141) comprise in the mineralisation zone (230) vanes (205-210) with adjustable angle of inclination to the longitudinal axis of the mineraliser tube (200), so that during the operation of mineraliser, for larger inclination angles of vanes (205-210) the batch material passes faster through the mineralisation zone than for smaller inclination angles of vanes (205-210),
- wherein to each mineraliser (139, 140, 141) a mixers (136, 137, 138) is assigned, configured to mix the wastes (124, 132, 133, 134, 135) with each other in proportions dependent on a predetermined amount of chemical energy of the batch material and on the inclination angle of vanes (205-210) set in the particular mineraliser (139, 140, 141), so that for a mineraliser (139, 140, 141) having a larger inclination angle of vanes (205-210) a mixture with a higher calorific value is selected than a calorific value of mixture for a mineraliser (139, 140, 141) having a smaller inclination angle of vanes(205-210),
- and wherein the mineralisers (139, 140, 141) have adjustable rotational speed, such as to allow adjustment of the rotational speed according to the moisture content of the mixture provided to the particular mineraliser (139, 140, 141).

## Patentansprüche

1. Verfahren zur Erzeugung von Elektrizität und Wärme in einem Prozess zur Wärmeumwandlung aus verschiedenen Typen von Abfällen in einer integrierten Anlage, wobei verschiedene Typen von Abfällen (101 bis 109) in getrennte Abfälle separiert werden, die zur thermischen Entsorgung (124, 132, 133, 134, 135) bestimmt sind, die anschließend in mindestens zwei Mineralisatoren (139, 140, 141) verarbeitet werden, die jeweils eine Form einer isolierten, länglichen, drehbaren und geneigten Röhre (200) mit Schaufeln (205 bis 210) haben, die an ihren Innenwänden angeordnet sind, um das Material während der Drehung der Röhre (200) zu verteilen, mit einer Verdunstungszone (220), in der die Verdunstung von Feuchtigkeit aus dem in Chargen zugeführten Abfallmaterial stattfindet, und mit einer Mineralisierungszone (230), in der ein Prozess einer Vergasung des Chargenmaterials stattfindet, und wobei das Chargenmaterial in ein heißes Gas und anorganischen Abfall umgewandelt wird, wobei anschließend das heiße Gas nach seiner Reinigung in Elektrizität und Wärme umgewandelt wird, **gekennzeichnet durch**:
- Ausführen von periodischen Messungen zum Bestimmen von Brennwert, Feuchtigkeitsgehalt und Gemischstruktur der zur thermischen Entsorgung bestimmten Abfälle (124, 132, 133, 134, 135) unter Verwendung von Analysatoren (114, 118, 122, 127, 129, 131),
- Verwenden von sich drehenden Mineralisatoren (139, 140, 141), die in der Mineralisierungszone (230) Schaufeln (205 bis 210) mit einem zur Längsachse der Mineralisatorröhre (200) verstellbaren Neigungswinkel aufweisen, sodass während des Betriebs des Mineralisators bei größeren Neigungswinkeln der Schaufeln (205 bis 210) das Chargenmaterial die Mineralisierungszone schneller durchläuft als bei kleineren Neigungswinkeln der Schaufeln (205 bis 210),
- **durch** Verwenden von Mischern (136, 137, 138), die den Mineralisatoren (139, 140, 141) zugewiesen sind, werden die Abfälle (124, 132, 133, 134, 135) miteinander in Mengenverhältnissen gemischt, die von einem vorgegebenen Betrag chemischer Energie des Chargenmaterials und dem Neigungswinkel der Schaufeln (205 bis 210) abhängen, der in dem jeweiligen Mineralisator (139, 140, 141) eingestellt ist, sodass für einen Mineralisator (139, 140, 141) mit einem größeren Neigungswinkel der Schaufeln (205 bis 210) ein Gemisch mit einem höheren Brennwert gewählt wird als ein Brennwert für einen Mineralisator (139, 140, 141) mit einem kleineren Neigungswinkel der Schaufeln (205 bis 210),
- wobei die Drehgeschwindigkeit jedes Mineralisators (139, 140, 141) gemäß dem Feuchtigkeitsgehalt des Gemischs eingestellt wird, das für den jeweiligen Mineralisator (139, 140, 141) bereitgestellt wird.

2. Anlage zur Erzeugung von Elektrizität und Wärme in einem Prozess zur Wärmeumwandlung aus verschiedenen Typen von Abfällen in einer integrierten Anlage, die einen Abschnitt zur Separierung von verschiedenen Typen von Abfällen (101 bis 109) aufweist, um Abfälle voneinander zu trennen, die zur thermischen Entsorgung (124, 132, 133, 134, 135) bestimmt sind, und mindestens zwei Mineralisatoren (139, 140, 141), die jeweils eine Form einer isolierten, länglichen, drehbaren und geneigten Röhre (200) mit Schaufeln (205 bis 210) haben, die an ihren Innenwänden angeordnet sind, um das Material während der Drehung der Röhre (200) zu verteilen, mit einer Verdunstungszone (220), in der die Verdunstung von Feuchtigkeit aus dem in Chargen zugeführten Abfallmaterial stattfindet, und mit einer Mineralisierungszone (230), in der ein Prozess einer Vergasung des Chargenmaterials stattfindet, und wobei das Chargenmaterial in ein heißes Gas und anorganischen Abfall umgewandelt wird, wobei die Anlage ferner Abschnitte zum Erzeugen von Elektrizität und Wärme aus dem heißen Gas aufweist, das aus dem Mineralisator (139, 140, 141) ausgegeben wird, **dadurch gekennzeichnet, dass**:
- sie Analysatoren (114, 118, 122, 127, 129, 131) aufweist, die konfiguriert sind, um periodische Messungen zum Bestimmen von Brennwert, Feuchtigkeitsgehalt und Gemischstruktur der zur thermischen Entsorgung bestimmten Abfälle (124, 132, 133, 134, 135) auszuführen,
- wobei die Mineralisatoren (139, 140, 141) in der Mineralisierungszone (230) Schaufeln (205 bis 210) mit einem zur Längsachse der Mineralisatorröhre (200) verstellbaren Neigungswinkel aufweisen, sodass während des Betriebs des Mineralisators bei größeren Neigungswinkeln der Schaufeln (205 bis 210) das Chargenmaterial die Mineralisierungszone schneller durchläuft als bei kleineren Neigungswinkeln der Schaufeln (205 bis 210),
- wobei jedem Mineralisator (139, 140, 141) ein Mischer (136, 137, 138) zugewiesen ist, der konfiguriert ist, um die Abfälle (124, 132, 133, 134, 135) miteinander in Mengenverhältnissen zu mischen, die von einem vorgegebenen Betrag chemischer Energie des Chargenmaterials und dem Neigungswinkel der Schaufeln (205 bis 210) abhängen, der in dem jeweiligen Mineralisator (139, 140, 141) eingestellt ist, sodass für einen Mineralisator (139, 140, 141) mit einem größeren Neigungswinkel der Schaufeln (205 bis 210) ein Gemisch mit einem höheren Brennwert gewählt wird als ein Brennwert für einen Mineralisator (139, 140, 141) mit einem kleineren Neigungswinkel der Schaufeln (205 bis 210),
- und wobei die Mineralisatoren (139, 140, 141) eine einstellbare Drehgeschwindigkeit haben, um so die Einstellung der Drehgeschwindigkeit gemäß dem Feuchtigkeitsgehalt des Gemischs zu gestatten, das dem jeweiligen Mineralisator (139, 140, 141) zugeführt wird.

## Revendications

1. Méthode de production d'électricité et de chaleur dans un procédé de conversion thermique de différents types de déchets dans une installation intégrée, différents types de déchets (101-109) étant séparés en déchets distincts destinés à une élimination thermique (124, 132, 133, 134, 135), qui sont ensuite traités dans au moins deux minéralisateurs (139, 140, 141) ayant chacun la forme d'un tube isolé, longitudinal, rotatif et incliné (200), muni d'aubes (205-210) disposées sur ses parois internes pour la diffusion de la matière au cours de la rotation du tube (200), avec une zone d'évaporation (220) dans laquelle a lieu l'évaporation de l'humidité provenant des déchets amenés en lots, et une zone de minéralisation (230) dans laquelle a lieu un procédé de gazéification des matières en lots, et les matières en lots étant transformées en un gaz chaud et des déchets inorganiques, le gaz chaud étant ensuite, après son épuration, transformé en électricité et en chaleur,
**caractérisée par**
- l'exécution de mesures périodiques pour déterminer la valeur calorifique, la teneur en humidité, et la structure de la composition des déchets destinés à une élimination thermique (124, 132, 133, 134, 135) à l'aide d'analyseurs (114, 118, 122, 127, 129, 131),
- l'utilisation de minéralisateurs rotatifs (139, 140, 141) comprenant, dans la zone de minéralisation (230), des aubes (205-210) avec un angle d'inclinaison ajustable relativement à l'axe longitudinal du tube minéralisateur (200), de sorte qu'au cours de l'utilisation du minéralisateur, avec des angles d'inclinaison supérieurs des aubes (205-210), les matières en lots passent plus rapidement par la zone de minéralisation qu'avec des angles d'inclinaison inférieurs des aubes (205-210),
- l'utilisation de mélangeurs (136, 137, 138) affectés aux minéralisateurs (139, 140, 141), les déchets (124, 132, 133, 134, 135) étant mélangés entre eux dans des proportions qui sont fonction d'une quantité prédéterminée d'énergie chimique des matières en lots et de l'angle d'inclinaison d'aubes (205-210) configurées dans le minéralisateur (139, 140, 141) en question, de sorte que pour un minéralisateur (139, 140, 141) avec un angle supérieur d'inclinaison des aubes (205-210), est sélectionné un mélange à valeur calorifique supérieure à la valeur calorifique d'un mélange pour un minéralisateur (139, 140, 141) présentant un angle d'inclinaison des aubes (205-210) inférieur,
- la vitesse de rotation de chaque minéralisateur (139, 140, 141) étant ajustée en fonction de la teneur en humidité du mélange fourni au minéralisateur (139, 140, 141) en question.

2. Installation pour la production d'électricité et de chaleur dans un procédé de conversion thermique de différents types de déchets dans une installation intégrée comprenant une section pour la séparation de différents types de déchets (101-109) afin de séparer des déchets destinés à une élimination thermique (124, 132, 133, 134, 135), et au moins deux minéralisateurs (139, 140, 141), ayant chacun la forme d'un tube isolé, longitudinal, rotatif et incliné (200), muni d'aubes (205-210) disposées sur ses parois internes pour la diffusion de la matière au cours de la rotation du tube (200), avec une zone d'évaporation (220) dans laquelle a lieu l'évaporation de l'humidité provenant des déchets amenés en lots, avec une zone de minéralisation (230) dans laquelle a lieu un procédé de gazéification des matières en lots, et les matières en lots étant transformées en un gaz chaud et des déchets inorganiques, l'installation comprenant en outre des sections pour la production d'électricité et de chaleur avec le gaz chaud refoulé par le minéralisateur (139, 140, 141), **caractérisée en ce que** :
- elle comprend des analyseurs (114, 118, 122, 127, 129, 131) configurés pour effectuer des mesures périodiques pour la détermination de la valeur calorifique, de la teneur en humidité, et de la structure de la composition structure des déchets destinés à une élimination thermique (124, 132, 133, 134, 135),
- les minéralisateurs (139, 140, 141) comprennent, dans la zone de minéralisation (230), des aubes (205-210) avec un angle d'inclinaison ajustable relativement à l'axe longitudinal du tube minéralisateur (200), de sorte qu'au cours de l'utilisation du minéralisateur, avec des angles d'inclinaison supérieurs des aubes (205-210), les matières en lots passent plus rapidement par la zone de minéralisation qu'avec des angles d'inclinaison inférieurs des aubes (205-210),
- à chaque minéralisateur (139, 140, 141) est affecté un mélangeur (136, 137, 138) configuré pour mélanger entre eux les déchets (124, 132, 133, 134, 135) dans des proportions qui sont fonction d'une quantité prédéterminée d'énergie chimique des matières en lots et de l'angle d'inclinaison d'aubes (205-210) configurées dans le minéralisateur (139, 140, 141) en question, de sorte que pour un minéralisateur (139, 140, 141) avec un angle supérieur d'inclinaison des aubes (205-210), est sélectionné un mélange à valeur calorifique supérieure à la valeur calorifique d'un mélange pour un minéralisateur (139, 140, 141) présentant un angle d'inclinaison des aubes (205-210) inférieur,
- et les minéralisateurs (139, 140, 141) tournant à une vitesse de rotation ajustable, de façon à pouvoir ajuster la vitesse de rotation en fonction de la teneur en humidité du mélange fournie au minéralisateur (139, 140, 141) en question.
